Europäisches Patentamt

European Patent Office

Office européen des brevets

(11) Publication number: **0 282 200**
**A2**

# EUROPEAN PATENT APPLICATION

(21) Application number: **88301559.6**

(22) Date of filing: **24.02.88**

(51) Int. Cl.⁴: **A23J 1/20**

(30) Priority: **10.03.87 GB 8705562**

(43) Date of publication of application:
**14.09.88 Bulletin 88/37**

(84) Designated Contracting States:
**AT BE CH DE ES FR GB GR IT LI LU NL SE**

(71) Applicant: **Cardiff Laboratories for Energy &
Resources Limited
Lewis Road East Moors
Cardiff CF1 5EG Wales(GB)**

(72) Inventor: **Stafford, David Anthony
26 Forsythia Drive
Greenways Cyncoed Cardiff Wales(GB)**
Inventor: **Grant, Roy Arthur
Willow Wood 24 Harbour View Road
Parkstone Dorset(GB)**
Inventor: **Tappouni, Yousif
11 Clwyd North Cliffe
Penarth South Glamorgan Wales(GB)**

(74) Representative: **Harding, Richard Patrick et al
Arthur R. Davies & Co. 27 Imperial Square
Cheltenham GL50 1RQ(GB)**

(54) **Whey processing.**

(57) A process for the separation of protein from whey includes a step of passing the whey to a demineralising tank 21 to control the pH value, e.g. 3.3 to 3.5, prior to passing the whey to a protein extraction column 30 in which the protein is separated using an ion exchange resin in a static bed. The protein is subsequently desorbed from the ion exchange resin by alkali fed in by an inlet 43 having feed apertures at different levels, while the bed of resin is stirred by a stirrer 38. The demineralised whey is shown as being fed to a centrifuge 32 for clarification and separation of curd fines prior to entering to the column 30.

## "Whey Processing"

This invention relates to the processing of whey, which is the liquid residue from milk used in making cheese or casein, or other dairy products. It is the residue produced when the curds have been removed from milk by means of rennet or acid. The whey content of milk represents around 90%.

It is well known that whey contains protein which, if separated from the lactose, is very useful in food preparation, and represents a substantial resource. It has been common practice to separate protein from whey before disposing of the lactose residue, but methods of protein separation in use at the present time are relatively inefficient, resulting in separation of only a relatively small proportion of the total protein present and thus much of this valuable material is disposed of as waste.

It is also important that the protein which is separated should be of high purity having certain desirable characteristics defined, inter alia, as follows:

a) being soluble in the range pH3 to pH9,

b) capable of gel formation at approximately 5-10% concentration,

c) good fat and water binding properties,

d) good aeration properties to allow foaming and whipping, and

e) having high nutritional value.

Existing protein separation processes include provision of a stirred tank reactor in which the whey is placed in contact with an ion exchange material. The deproteinised whey can then be further processed by, for example, anaerobic digestion, fermentation to produce alcohols, or other chemical extraction procedures. Desorption of the protein from the ion exchange material to which it has become bound is carried out using alkali. Ultrafiltration followed by spray drying of the product is usually then carried out.

The stirred tank reactor plant required for this type of treatment is large and expensive and is not very efficient, leaving a relatively high proportion of the protein in the whey which is discarded.

It is the object of this invention to provide a method of whey processing which results in high protein n separation, and which is relatively less complex and expensive than conventional methods.

It has been found that the protein extraction rate is sensitive to the pH value, so that proper control of the pH value of the incoming whey is important for protein extraction by the ion exchange material.

In accordance with a first aspect of the present invention there is provided a method of whey processing for separation of protein comprising the steps of subjecting whey to a demineralising process to adjust the pH value thereof, passing the whey to a container in which there is an ion exchange resin by means of which the protein is separated from the whey, withdrawing the whey with residual lactose from the container, recovering the protein from the ion exchange resin using an alkali solution, and withdrawing the protein from the container.

It is particularly beneficial if the ion exchange resin is static in a container during protein separation.

Demineralising the whey, using an ion exchange resin has the beneficial effect of giving a wider pH range for protein adsorption in the main ion exchange reactor container, which is preferably in the form of a column.

Preferably, the ion exchange resin is drained of residual whey and water rinsed prior to recovery of the protein.

Conveniently, the protein recovery is aided by stirring the contents of the container, including the alkali solution and the resin. This tends to maintain an even pH value of 9 for protein desorption.

Conveniently also, the removal of the protein is by draining, and may be assisted by water rinsing.

The protein is conveniently subsequently ultrafiltered and spray dried.

The ion exchange resin may be reactivated by the addition of acid to bring the pH level to the required value. Preferably, the resin is agitated during acid addition.

It is preferred that for protein separation the pH level should be approximately 3.3 to 3.5 pH.

Advantageously, the deproteinised whey is passed to an anaerobic digester or other system, such as a fermenter, for downstream processing of the lactose.

The demineralising resin may be regenerated with acid.

The demineralised whey may be centrifuged to recover curd fines, and also to produce a material (the centrate) with less suspended solids, prior to protein extraction.

A proportion of the protein eluant may be recycled together with further raw whey.

A further object of the invention is to provide a whey processing plant which is efficient and relatively economical in construction and use.

In accordance with this aspect, the invention resides in a whey processing plant comprising a demineralising apparatus at which the pH value of raw whey is adjusted, a container to which the demineralised whey is supplied, the container having ion exchange resin for separation of protein from the whey, means for draining the lactose from the whey, means for supplying alkali solution for recovery of the protein, and means for removal of the protein.

Means are conveniently provided for supplying acid solutions to regenerate and reactivate the ion exchange resin.

Preferably the demineralising apparatus includes a container to which the whey is supplied and containing an ion exchange material for demineralisation. This is intended to remove ions such as sodium and chlorine which may be present in the whey.

An associated apparatus may be provided for regenerating the ion exchange material, which may be a demineralising resin, in the demineralising apparatus, by acid treatment.

For instance, the resin and an agitator may be bodily removable to a regenerating tank. To enable substantially continuous treatment, a further batch of resin, together with an agitator, may then be introduced into the demineralising tank.

The apparatus may include a centrifuge to separate curd fines from the demineralised whey prior to it being fed to the container.

Conveniently, the container in which the protein separation takes place is a column having an inlet for whey from the demineralising apparatus, an alkali and acid supply inlet, and an outlet for the products.

The container also preferably has a stirring device whereby substantially the whole contents can be stirred when required.

The alkali supply inlet may conveniently be arranged to distribute the alkali at different levels in the column by supplying through a plurality of inlets at different levels.

A system is preferably provided for separating the materials drained from the column to respective storage or other zones respectively.

Ultra filtration and spray drying apparatus are preferably provided for recovery of the protein separated from the eluant.

A number of the containers may be provided, and a system is arranged to supply and separate the materials to and from the containers respectively, in predetermined order, the protein eluant from the containers being supplied to a common storage or outlet means.

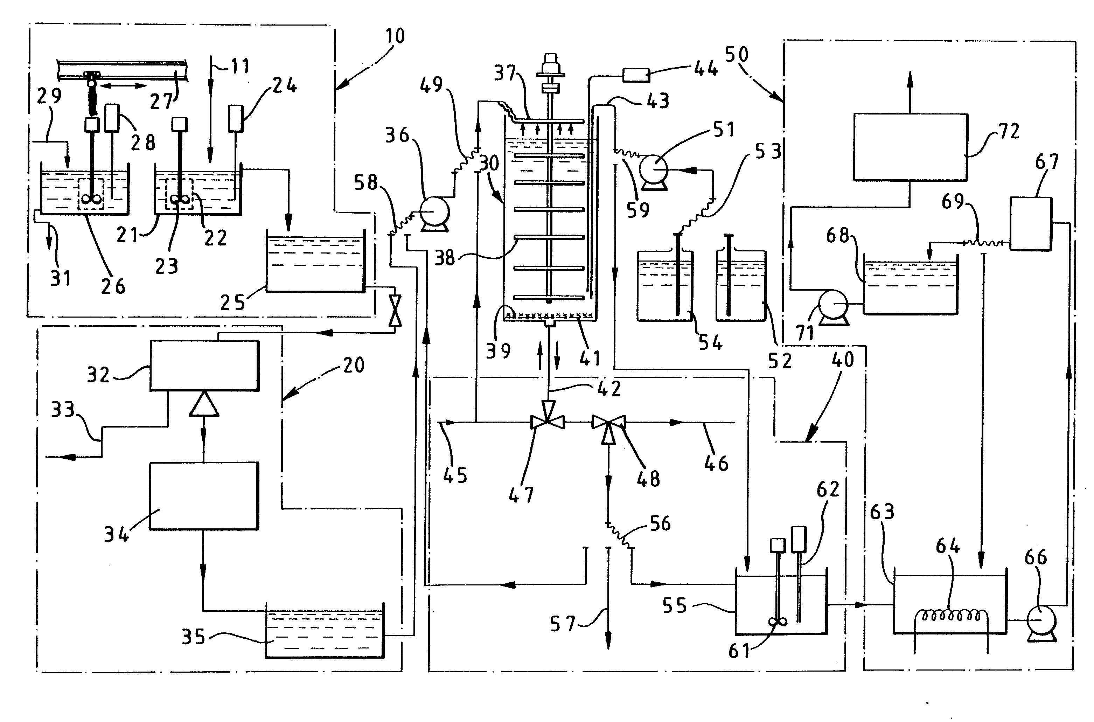

The invention will now be described by way of example with reference to the accompanying drawing, the single figure of which is a diagrammatic layout of a batch handling on semi-continuous whey processing plant constructed in accordance with the present invention.

The drawing shows a plant basically including means for demineralising the raw whey, as indicated at 10, to adjust the pH value, apparatus 20 for clarifying the demineralised whey prior to separation of the protein, an ion exchange resin bed in a column type container 30 in which protein separation takes place, a system 40 for separating an eluant from the waste materials, and means 50 for storing, filtering, and spray drying the protein eluant.

The raw whey is supplied, for example from a creamery, along a line 11 to the whey demineralising apparatus 10, which comprises a container on tank 21 to which the whey is fed. This tank 21 contains ion exchange material calculated to lower the pH value, preferably to about pH 3.4, and at least partially de-salts or demineralises the whey. This has the effect of increasing the pH range over which whey protein adsorption takes place to a range between pH 3.0 and pH 4.5.

A suitable demineralising resin has been found to be that resin sold as Zerolit 225H. It is commonly used for water softening and de-salting and is strongly acidic. It is a unifunction, cation exchange resin, containing sulphuric acid groups. It is based on cross-linked polystyrene, and has a robust gel structure, and has suitably good physical and chemical characteristics. In the form used it is moist amber beads in sodium or hydrogen form. The hydrogen form was preferred. In the apparatus used, the total ion exchange capacity was 2 Kg eq/m³. The softening capacity of the material is dependent upon the ratio of the hardness of the water to be treated, to the sodium content, and also the absolute concentrations. When sodium salts constitute less than 20% of the total cations the softening capacity will be correspondingly decreased.

The demineralising resin is contained in a closed basket-like construction 22, with a motorised agitator 23. The tank 21 also has a pH meter 24. The tank 21 feeds demineralised resin to a buffer tank 25.

The resin in the basket 22 can be regenerated by transferring the basket as a whole into an associated regenerating tank 26 using an overhead gantry crane 27. The tank 26 has a pH meter 28, and an acid supply inlet 29. A drain outlet 31 is also provided. The regenerative cycle includes subjecting the resin to a pH value of 1 in the tank 26.

From the demineralising apparatus 10, the whey is fed from a buffer tank 25 to a centrifuge 32 which separates the curd fines for the recovery along a line 33 and passes the clarified whey to a pasteuriser/cooler unit 34 and thence to a buffer tank 35 for the clarified whey.

Supply of whey to the column 30 is by a metering feed pump 36 through a distributing head 37 in the top of the column 30. In the column 30 there is disposed a stirrer 38 of the kind having stirring elements at different levels, so that the bed is capable of being fluidised at all levels within the column 30. The stirrer 38 is motorised.

In the base of the column is a filter screen 39 which in this example is 100 mesh, carried on a support grid 41. Beneath this, in the bottom well of the column, is an outlet to a line 42. A further inlet 43 for alkali is provided at the side of the column and this has a plurality of outlets to enable alkali to be fed in to the bed at different levels simultaneously. A pH meter 44 is also provided to enable the pH value to be monitored.

The column in the batch handling plant described was of glass and had a diameter of 0.45 m and a height of 1.5 m. The column contained a 100 litre bed of ion exchange resin. The type of ion exchange resin chosen was of the indion series of adsorbents based on a cross-linked hydrophilic matrix derived from regenerated cellulose. This type of adsorbent has a similar order capacity for macromolecules as fibrous cellulose ion exchangers, and has good hydraulic properties and physical stability. These indion ion exchange resins are carboxymethyl derivatives of cross-linked regenerated cellulose, the degree of swelling of the resin being carefully controlled to give high density protein retention capacity. There is minimal concentration of lipid material.

The particular material chosen was that identified as $HC_2$ (1218). At pH3.0,9 kg of the resin was sufficient to give a bed volume of 100 litres. Protein uptake was found to be around 73%. The particle size of the resin was 150 - 250 Microns. It was found to have small ion exchange capacity of 1.7 mg/g, an available capacity of 200 mg/g, and approximate moisture of 88% w/w.

In use, the adsorption of protein from the whey took place at pH of 3.3 to 3.5 without stirring. The whey in the line 42 is passed to a drain or offtake line 46 via changeover valves 47 and 48. When the resin requires regenerating, the resin bed is drained out and rinsed with mains water from a line 45 via a changeover valve 49 to remove the lactose residue. 1 to 1.5 times the bed volume rinsing is preferred.

The protein was then recovered from the resin by treatment with an alkali solution fed in by a pump 51 through the inlet 43 with plural inlets at different levels in the column. Alkali is supplied from a supply reservoir 52 via a changeover valve 53. An acid reservoir 54 is also provided.

To prevent excessive denaturation of the protein, the bed in the column 30 is fluidised using the stirrer 38. Alkali (10% $NH_3$) can thus be added without the pH in any part of the bed exceeding 9.0. Desorption by means of alkali solution can alternatively be carried out with other bases such as sodium or potassium hydroxide. The bed was stirred for about 30 minutes, after which stirring was stopped to allow the resin to settle to reform the bed. The protein was then drained out from the column via the line 42, at least down to the filter level and the column 30 was then rinsed using mains water from the line 45 to draw off residual protein. 1 to 1.5 times the column volume is a suitable quantity amount of mains water for this purpose.

The protein-bearing eluant is then taken through the valves 47 and 48 to an eluant holding tank 55. The changeover valve 48 feeds either to the drain or offtake line 46 or to a three way valve indicated at 56. By means of this, a sample can be taken at a sampler 57, or a proportion of the lactose or of the protein can be recycled via changeover valve 58 to the pump 36 and to the column 30. The third connection is that used to feed the eluant holding tank 55.

The eluant tank 55 is conveniently treated with additional acid from the acid reservoir 54 fed by the pump 51 through a changeover valve indicated at 59. The pH of the eluant in this adjuster to PH7 (neutral) The tank 55 has an agitator 61 and a pH meter 62. A further eluant storage tank 63 is connected to tank 55 and is provided with a heater 64. An outlet from the tank 63, through a pump 66, leads to an ultrafiltration unit 67. The permeate is withdrawn to waste and the retentate can be returned to the tank 63 or led to a concentrate reservoir 68. A changeover valve 69 is shown for this purpose, but a proportioning valve may be used to enable both functions to be performed simultaneously.

There is an outlet from the concentrate reservoir 68 to a pump 71 leading to a spray dryer unit 72. The dry powder can be removed therefrom to be used as required.

After removal of the protein, and rinsing from the column 30, the resin in the column 30 is regenerated by acid treatment from the acid reservoir 54, being fluidised by stirring during this stage. Hydrochloric or sulphuric acid may be used. This brings the resin to pH 3.3 to 3.5 again. After settling, the system is ready for treatment of a new batch of whey.

The de-proteinised whey, which is mainly lactose, can be fed from the line 46 to an anaerobic digester, or a fermenter, or other downstream processor, for extraction of chemicals or production of alcohol. Anaerobic digestion can be used to produce methane gas which can be used to produce heat and electricity to run the whey processing plant.

In an alternative large scale form of the plant for processing whey, a number of columns 30, for example three or four, may be provided with appropriate changeable connections to the pump 36 and line 42, and the other parts of the plant, whereby the columns can be operated in sequence. For example, while one column is being filled, and protein adsorption is taking place, another may be in the alkali solution, protein recovery stage, and another may be undergoing rinsing to complete the drainage of recovered protein. By these means, processing of raw whey and production of protein in the required form may be substantially continuous.

An economical and relatively compact plant can thus be provided, which achieves protein isolation from whey, of very high percentages. Fully continuous, semi-continuous or batch handling processing can be carried on in a commercially efficient manner.

## Claims

1. A method of whey processing for separation of protein comprising the steps of passing the whey to a container (30) in which there is an ion exchange resin by means of which the protein is separated from the whey, withdrawing the whey with residual lactose from the container (30), recovering the protein from the ion exchange resin using an alkali solution and withdrawing the protein from the container (30), characterised in that the whey is subjected to a demineralising process to adjust the pH value thereof, prior to protein separation.

2. A method according to claim 1, characterised in that the ion exchange resin is static in the container (30) during protein separation.

3. A method according to claim 2, in which the ion exchange resin in the container (30) is reactivated by the addition of acid to bring the pH level to the required value, characterised in that the resin is agitated during acid addition.

4. A method according to any of the preceding claims, characterised in that the protein separation is carried out at a pH level from approximately 3.3 to 3.5.

5. A process according to any of the preceding claims, characterised in that the demineralising is achieved using an ion exchange resin, which is regenerated with acid.

6. A process according to any one of the preceding claims, characterised in that the demineralised whey is centrifuged to recover curd fines prior to protein extraction.

7. A whey processing plant comprising a container (30) to which the whey is supplied, the container (30) having ion exchange resin for separation of protein from the whey, means (42) for draining the lactose from the whey, means (51, 52, 53) for supplying alkali solution for recovery of the protein, and means for removal of the protein, characterised by further comprising a demineralising apparatus (21, 22, 23) at which the pH value of raw whey is adjusted upstream of the container (30).

8. A whey processing plant according to claim 7, characterised in that the demineralising apparatus includes a container (21) to which the whey is supplied and containing an ion exchange material.

9. A whey processing plant according to claim 8, characterised by comprising an associated apparatus (26) for regenerating the ion exchange material in the demineralising apparatus, by acid treatment.

10. A whey processing plant according to claim 9, characterised in that the resin and an agitator (23) are bodily removable between the container (21) and a regenerating tank (26).

11. A whey processing plant according to any of claims 7 to 9, characterised by comprising a centrifuge (32) to separate curd fines from the demineralised whey prior to it being fed to the container (30).

0 282 200